**Europäisches Patentamt**

**European Patent Office**

**Office européen des brevets**

(19)

(11) Numéro de publication : **0 688 717 A1**

# (12) DEMANDE DE BREVET EUROPEEN

(21) Numéro de dépôt : **95460026.8**

(22) Date de dépôt : **22.06.95**

(51) Int. Cl.⁶ : **B65B 25/04**, B65B 19/34, B65G 17/32

(30) Priorité : **24.06.94 FR 9408041**

(43) Date de publication de la demande :
**27.12.95 Bulletin 95/52**

(84) Etats contractants désignés :
**BE DE DK ES FR GB IT NL**

(71) Demandeur : **Colin, Jean-Yves**
**20 rue Lucien Simon**
**F-29000 Quimper (FR)**

(72) Inventeur : **Colin, Jean-Yves**
**20 rue Lucien Simon**
**F-29000 Quimper (FR)**

(74) Mandataire : **Vidon, Patrice**
**Cabinet Patrice Vidon,**
**Immeuble Germanium,**
**80, Avenue des Buttes de Coesmes**
**F-35700 Rennes (FR)**

(54) **Procédé et dispositif pour le conditionnement de produits tels que les haricots verts**

(57)   L'invention concerne un procédé pour le conditionnement d'un produit comme les haricots verts consistant à recueillir une pluie régulière et continue du produit à conditionner dans des godets à volume variable ouverts, refermer en continu les godets contenant le produit pour amener lesdits godets sensiblement au volume du conditionnement désiré et transférer en continu le produit contenu par les godets dans un emballage, la vitesse de défilement desdits godets étant régulée en fonction de la mesure du débit massique dudit produit. Un dispositif est décrit comprenant une table vibrante (1), au moins un convoyeur de transfert (2), un convoyeur (3) à godets (4), un plateau (7) pourvu de poussoirs (7a) pour pousser les contenus des godets (4) dans des boîtes (13) et des moyens agissant sur la vitesse dudit convoyeur (3) à godets (4) à partir de données fournies par des moyens électroniques (11,14) mesurant le poids dudit produit présent sur ledit convoyeur de transfert (2).

Fig. 4

EP 0 688 717 A1

La présente invention concerne un procédé et un dispositif pour le conditionnement de produits dont la forme et/ou les dimensions et/ou la rigidité ne permettent pas un conditionnement en vrac dans un emballage.

Le procédé et le dispositif selon l'invention peuvent ainsi être mis en oeuvre dans le cadre du conditionnement en boîtes de conserve des haricots verts à une cadence industrielle.

Les procédés industriels classiques de mise en boîtes (boîtes de conserve, bocaux...) réalisent l'emboîtage en vrac des haricots verts ce qui oblige, pour obtenir des cadences acceptables, à ramollir ceux-ci en augmentant le temps de blanchiment. La qualité des produits conditionnés de cette manière s'en trouve ainsi diminuée.

Le principal objectif de la présente invention est de proposer un procédé et un dispositif permettant le conditionnement de produits tels que les haricots verts ne mettant pas en oeuvre un ramollissement de ceux-ci et permettant ainsi de mettre en boîtes des haricots verts plus rigides et donc plus "croquants".

Un autre objectif de l'invention est de décrire un tel procédé permettant d'améliorer la qualité de l'emboîtage.

Encore un autre objectif de l'invention est de présenter un tel procédé permettant de présenter les haricots en bottes ce qui est particulièrement intéressant dans le cadre de la mise en bocaux.

Ces différents objectifs sont atteints grâce à l'invention qui concerne un procédé pour le conditionnement d'un produit dont la forme et/ou la dimension et/ou la rigidité empêchent un conditionnement en vrac, caractérisé en ce qu'il comprend les étapes consistant à :

- recueillir une pluie régulière et continue du produit à conditionner, dans des godets à volume variable et à défilement continu, lesdits godets étant dans une position ouverte ;
- refermer en continu les godets contenant le produits pour amener lesdits godets sensiblement au volume du conditionnement désiré ;
- transférer en continu le produit contenu par les godets dans un emballage ; la vitesse de défilement desdits godets étant régulée en fonction de la mesure du débit massique dudit produit.

On notera que l'on connaît déjà de l'état de la technique un procédé réalisant la mise en boîte de saucisses comprenant une étape intermédiaire de mise en godets. Ce procédé est décrit dans le brevet américain US-A-4,386,490. Toutefois, selon ce procédé, un mécanisme permet de distribuer un nombre donné de saucisses dans chaque godet. Un tel mécanisme ne pourrait être utilisé avec des produites plus fins et plus légers tels que haricots verts.

On connaît également du brevet américain US-1-4,453,368 un procédé et un appareil d'emballage de pointes d'asperges dans des bocaux consistant à amener celles-ci par l'intermédiaire d'un convoyeur sur une portion de bande puis à enrouler la portion de bande avec les produits qu'elle porte, de façon à former un cylindre de produits et enfin à pousser le cylindre de produits dans un bocal. Toutefois, la technique décrite dans ce document est également inadaptée aux produits plus find que les pointes d'asperges du type des haricots verts, puisqu'elle ne présente pas de moyens permettant de contrôler le poids de tels produits répartis dans les bocaux.

Selon une variante préférentielle de l'invention, la pluie de produit est réalisée de manière à ce que les éléments individuels le constituant soient orientés et animés d'une même vitesse horizontale.

L'invention concerne également un dispositif destiné à la mise en oeuvre d'un tel procédé caractérisé en ce qu'il comprend une table vibrante, au moins un convoyeur de transfert, un convoyeur à godets, un plateau pourvu de poussoirs pour pousser les contenus des godets dans des boîtes et un calculateur agissant sur la vitesse dudit convoyeur à godets à partir de données fournies par des moyens électroniques mesurant le poids dudit produit présent sur ledit convoyeur de transfert.

Selon une variante préférentielle, ladite table vibrante est équipée de tôles verticales présentant des encoches décalées, de manière à ce que les constituants du produit tombent verticalement en long sur ledit convoyeur.

Avantageusement, chaque godet forme un cylindre découpé en trois parties, deux parties latérales et une partie centrale, lesdites parties latérales s'articulant sur ladite partie centrale.

Egalement avantageusement, le dispositif selon l'invention comprend deux galets permettant à une came de fermer et d'ouvrir chaque godet.

Préférentiellement, ledit convoyeur à godets coopère avec un pignon solidaire dudit plateau, ledit pignon présentant une denture appropriée pour maintenir les godets fermés pendant le transfert de leur contenu dans les boîtes.

Selon une variante de l'invention, le dispositif ne comprend pas qu'un seul convoyeur permettant le transfert du produit provenant de la table vibrante jusqu'au godet.

Ainsi, avantageusement, le dispositif comprend un convoyeur répartiteur pourvu de taquets et un convoyeur intermédiaire sur lequel est déposé le produit provenant desdits taquets (16). Un tel arragement permet encore d'améliorer la régularité des quantités et/ou des poids de haricots verts distribués dans les godets

Egalement avantageusement, ledit dispositif comprend de plus un convoyeur de transfert de petite dimension, dit convoyeur de pesée, positionné à proximité de la chaîne à godets et relié auxdits moyens electronique mesurant le poids dudit produit présent sur ledit convoyeur de pesée. Ce petit convoyeur permet d'affiner encore la répartition.

L'invention ainsi que les différents avantages qu'elle présente seront plus facilement compris grâce à la description qui va suivre de deux modes non limitatifs de réalisation en références aux dessins dans lesquels :

- la figure 1 représente une vue schématique de côté d'un premier mode de réalisation d'un dispositif selon l'invention ;
- la figure 2 représente une vue schématique de dessus du dispositif montré à la figure 1 ;
- la figure 3 représente une vue schématique de côté des moyens permettant la fermeture des godets ;
- la figure 4 représente une vue schématique de côté des moyens permettant la mise en boîte du contenu des godets ;
- la figure 5 représente une vue schématique de dessus de l'ensemble du dispositif ;
- la figure 6 représente une vue en perspective des plaques équipant la table vibrante du dispositif montré aux figures 1 à 5 ;
- la figure 7 représente un autre mode de réalisation de telles plaques ;
- la figure 8 représente une vue schématique de côté d'un second dispositif selon l'invention ;
- la figure 9 représente une vue schématique de dessus du dispositif montré à la figure 8 ;
- la figure 10 représente schématiquement les moyens électroniques dudit dispositif

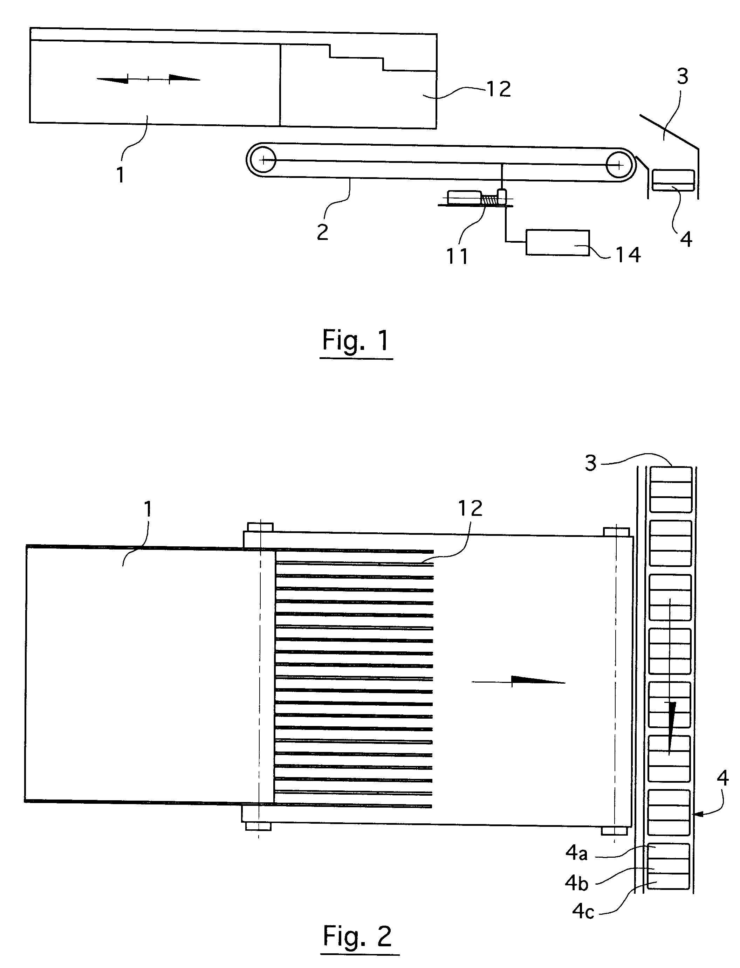

En référence aux figures 1 à 6, le premier mode de réalisation du dispositif décrit est utilisé pour l'emboîtage de haricots verts et comprend essentiellement:

a) une table vibrante 1 sur laquelle le produit est réparti, ladite table 1 étant équipée de tôles verticales 12 à encoches décalées 12a;

b) un convoyeur 2 de transfert sur lequel tombent les haricots verts provenant de la table vibrante 1,

c) un convoyeur 3 à godets 4 à volume variable, chaque godet ayant la forme d'un cylindre découpé en trois parties, deux parties latérales 4a,4b et une partie centrale 4c, lesdites parties latérales 4a, 4b s'articulant sur la partie centrale 4c et présentant par ailleurs deux galets 6 ;

d) une came 5 destinée à coopérer avec les galets 6 des godets 4 afin de permettre la fermeture de ceux-ci ;

d) un plateau à poussoirs 7 coopérant avec ledit convoyeur 3, lesdits poussoirs permettant de pousser les haricots présents dans les godets 4 dans des boîtes 13.

Selon l'invention, le dispositif est pourvu d'un ou plusieurs peson 11 prévu sur le convoyeur 2, et d'un calculateur 14. Ces moyens électroniques permettent de gérer les vitesses relatives du produit à conditionner et du convoyeur à godets 3 et ainsi d'améliorer la régularité du poids de haricots verts transférés dans chaque boîte.

Plus précisément le fonctionnement du dispositif est le suivant.

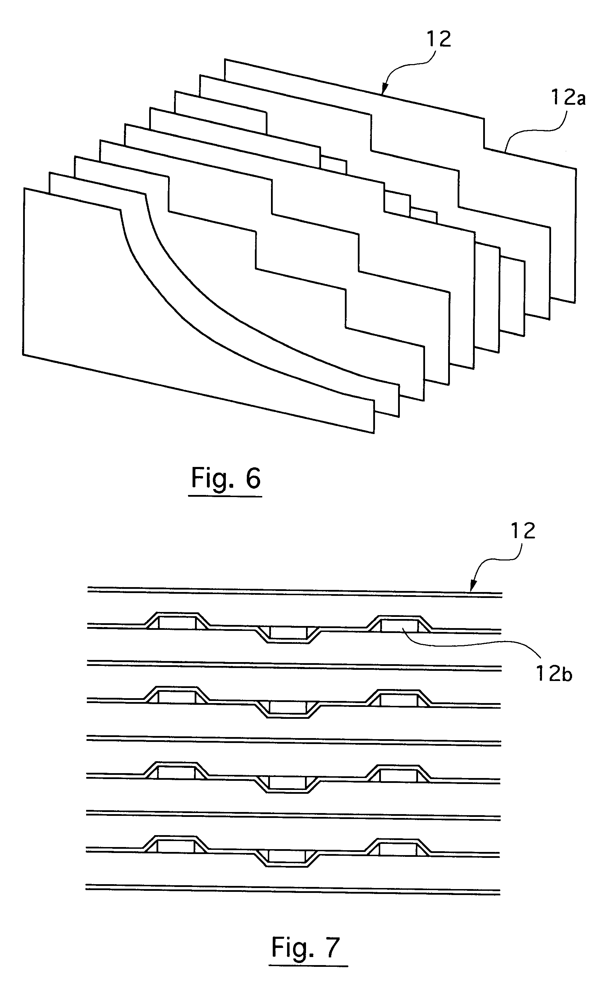

Les haricots verts à mettre en boîte sont répartis en pluie sur la table vibrante 1. Les tôles 12 pourvues d'encoches décalées 12a qui équipent cette table vibrante (voir plus particulièrement la figure 6) permettent aux haricots verts de tomber en long sur ce convoyeur 2 et de prendre tous sensiblement la même orientation essentiellement parallèle à l'axe du déplacement du convoyeur 2. A l'extrémité du convoyeur 2, les haricots tombent alignés dans les godets 4 du convoyeur 3 installé perpendiculairement au convoyeur 2.

Le peson 11 prévu sous le convoyeur de transfert 2 et le calculateur 14 permettent de régler la vitesse du convoyeur 3 de façon à réguler la quantité de haricots verts distribué dans chaque godets 4.

Les quantités de haricots verts distribués dans les godets 4 se trouvent ainsi homogénéisées grâce d'une part à l'emploi des plaques 12 à encoches décalées 12a et surtout grâce au peson 11 relié au calculateur 14.

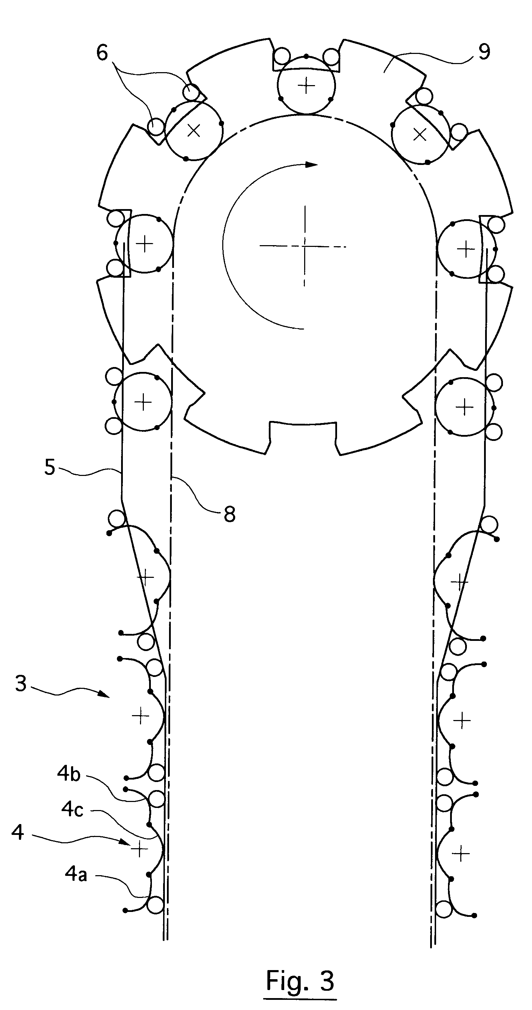

En référence à la figure 3, le convoyeur 3 sur lequel sont fixés les godets 4 est entraîné par une chaîne 8 coopérant avec un pignon 9 présentant une denture approprié pour maintenir les godets 4 fermés. Cette fermeture est réalisée grâce à une came 5 coopérant avec les galets 6 prévus sur chaque godet 4 de façon à rabattre les parties latérales 4a, 4b de ceux-ci sur la partie centrale.

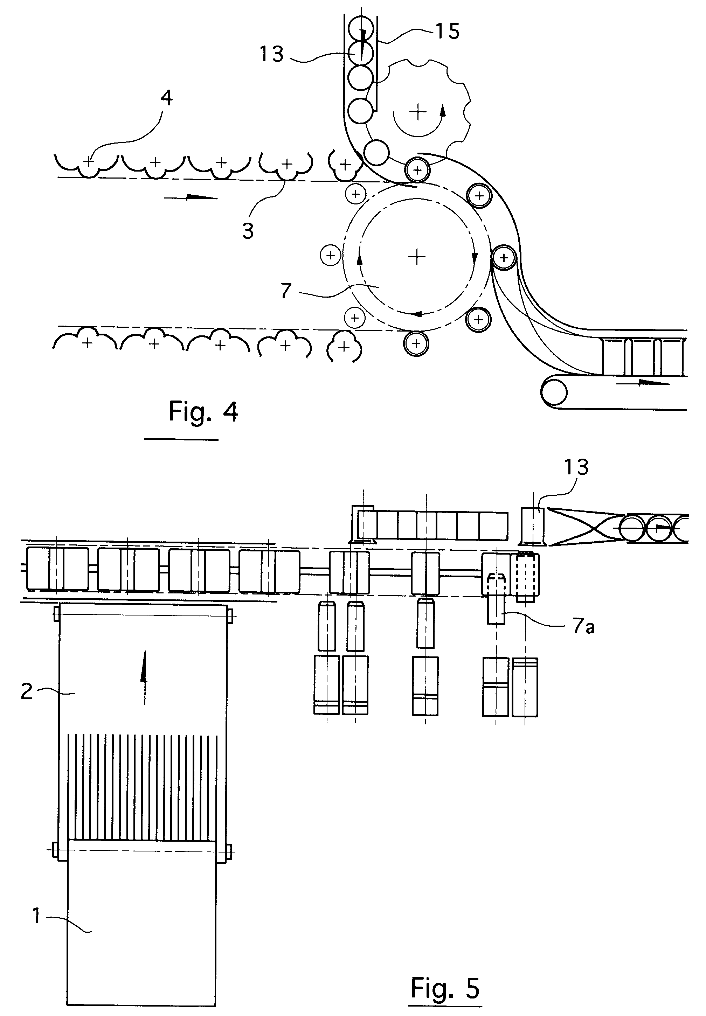

En référence aux figures 4 et 5, ce même pignon coopère avec un plateau 7 pourvu de poussoirs 7a. Ces poussoirs sont mis en oeuvre pour transférer les contenus des godets dans des boîtes 13, tels que notamment des boîtes de conserve ou encore des bocaux défilant sur une chaîne 15.

Après que le contenu des godets 4 ait été transféré dans les boîtes 13, ceux-ci sont réouverts grâce à la came 5 pour recevoir à nouveau des haricots verts provenant du convoyeur 2.

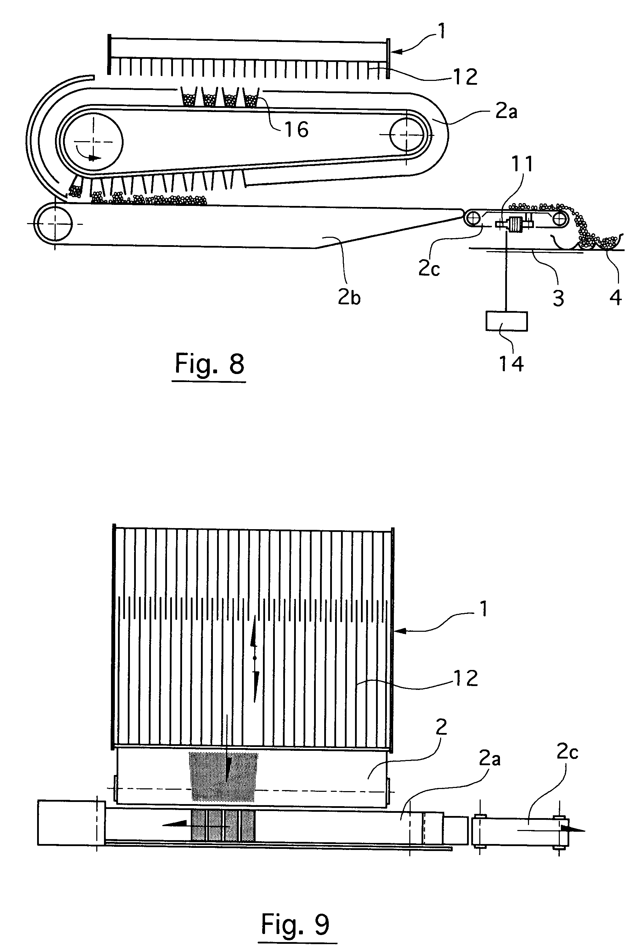

En référence aux figures 8 et 9, le deuxième mode de réalisation du dispositif selon l'invention diffère du premier mode ci-dessus décrit en ce que l'acheminement des haricots verts de la table vibrante 1 jusqu'au convoyeur 3 à godets 4 est effectué grâce à un premier convoyeur de transfert 2 couplé à un convoyeur répartiteur 2a pourvus de taquets 16, à un convoyeur intermédiaire 2b et à un convoyeur de pesée 2c équipé d'un peson 11 couplé à un calculateur 14.

La table vibrante 1 présente une longueur d'environ 1,20 m pour une largeur de 80 cm et est animée de vibrations présentant une fréquence de 10 Hz pour une amplitude de 10mm à 30 degrés. Elle est équipée de plaques 12, représentées en section transversale à la figure 7, qui montrent des encoches décalées 12b.

A l'extrémité du convoyeur de transfert 2, les haricots verts alignés tombent entre les taquets 16 du convoyeur répartiteur 2a dont la direction de déplacement est essentiellement perpendiculaire à l'axe de déplacement du convoyeur de transfert 2. Les haricots verts présents dans les taquets sont ensuite répartis de façon uniforme sur le convoyeur intermédiaire 2b installé sous le convoyeur répartiteur 2a puis acheminés sur le convoyeur de pesée 2c avant d'être distribués dans les godets 4 du convoyeur à godets 3.

Le premier convoyeur de transfert 2 présente une longueur et une largeur de 0,80m et est animé d'une vitesse de 1 m/s. Son déplacement est parallèle aux vibrations de la table vibrante 1.

Le convoyeur répartiteur 2a présente une longueur de 1 m pour une largeur de 12,5 cm est animé d'une vitesse de 1 m/s. La hauteur des taquets est de 8 cm.

Le convoyeur intermédiaire 2b présente environ les mêmes dimensions que le convoyeur 2a et est animé d'une vitesse de 0,8 m/s.

Enfin, le convoyeur de pesée 2c présente une longueur de 26 cm et une largeur de 12,5 cm et une vitesse de 0,8 m/s.

Les godets 4 présentent en position fermée un diamètre intérieur de 95 mm et une profondeur de 125 mm. Selon l'invention, leur vitesse de défilement est variable en fonction de la pesée effectuée au niveau du convoyeur 2c grâce au peson 11 et en fonction de la consigne de poids intégrée dans le calculateur 14.

La formule de régulation de la vitesse intégrée dans le calculateur est la suivante :

$$V_t = [P_{(t\ -\ 0,5\ s)} + [P_{(t\ -\ 0,5\ s)} - P_{(t\ -\ 0,6s)}]/5]/P_C \times 0,8$$

dans laquelle :
Pt est le poids mesuré à un temps t, mesuré en daN;
Vt est la vitesse de défilement des godets à un instant t, mesuré en m/s;
Pc est la consigne de poids à mettre par boîte, mesuré en daN.

Une telle régulation est du type proportionnelle dérivée avec retard (0,5s).

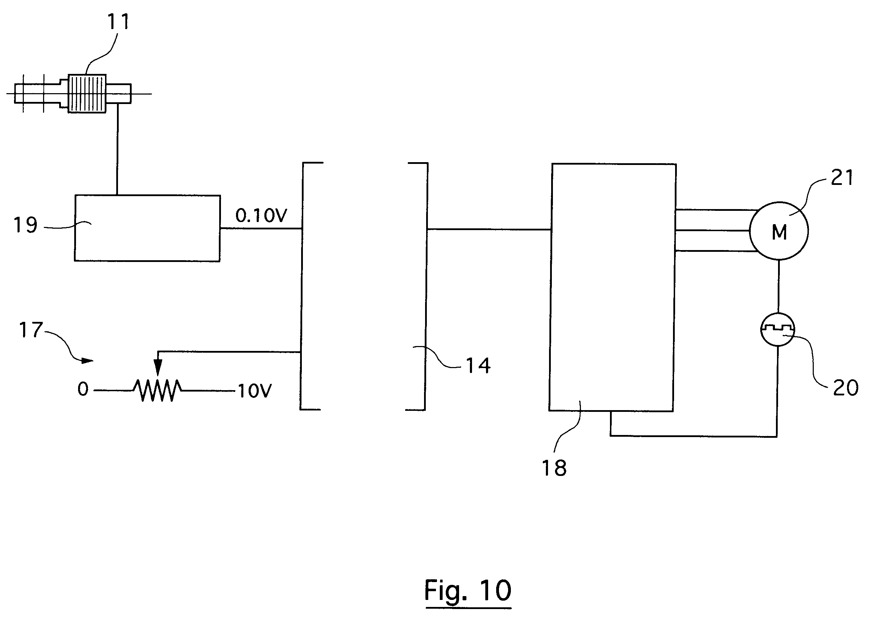

En référence à la figure 10, la chaîne électronique du dispositif comprend essentiellement un peson 11 prévu sous le convoyeur 2 ou 2c, un calculateur 14, des moyens d'entrée d'une consigne de poids 17, un variateur électronique 18, un convertisseur 19 et un codeur 20.

Le fonctionnement de ces moyens électroniques est le suivant.

Préalablement, la valeur de consigne de poids, traduisant le poids de produit devant être distribué dans chaque boîte, doit être rentrée grâce aux moyens 17 prévus à cet effet. La valeur correspondante est directement transmise au calculateur 14.

Lors du passage des haricots verts sur le convoyeur équipé du peson, les données relevées par celui-ci sont converties grâce au convertisseur 19 et transmises également au calculateur. En fonction du poids mesuré par le peson 11 et du poids de consigné rentré, le calculateur 14 transmet au variateur électronique une consigne de vitesse. Ce variateur électronique peut alors agir directement sur le moteur 21 de la chaîne à godets pour faire varier la vitesse de celle-ci.

Les deux modes de réalisation de l'invention ici décrits n'ont pas pour objet de réduire la portée de l'invention. En particulier, on notera qu'il pourra être envisagé d'utiliser d'autres moyens électroniques de régulation de la vitesse de la chaîne à godets sans sortir du cadre de celle-ci. Il pourra aussi être envisagé de mettre en oeuvre le procédé et le dispositif selon l'invention pour d'autres types de produits que les haricots verts.

## Revendications

1. Procédé pour le conditionnement d'un produit dont la forme et/ou la dimension et/ou la rigidité empêchent un conditionnement en vrac, caractérisé en ce qu'il comprend les étapes consistant à:
   - recueillir une pluie régulière et continue du produit à conditionner, dans des godets à volume variable et à défilement continu, lesdits godets étant dans une position ouverte;
   - refermer en continu les godets contenant le produit pour amener lesdits godets sensiblement au volume du conditionnement désiré;
   - transférer en continu le produit contenu par les godets dans un emballage;

   la vitesse de défilement desdits godets étant régulée en fonction de la mesure du débit massique dudit produit.

2. Procédé selon la revendication 1 caractérisé en ce que la pluie de produit est réalisée de manière à ce que les éléments individuels le constituant soient orientés et animés d'une même vitesse horizontale.

3. Dispositif destiné à la mise en oeuvre du procédé selon l'une des revendications 1 ou 2 caractérisé en ce qu'il comprend une table vibrante (1), au moins un convoyeur de transfert (2), un convoyeur (3) à godets (4), un plateau (7) pourvu de poussoirs (7a) pour pousser les contenus des godets (4) dans des boîtes (13) et des moyens agissant sur la vitesse dudit convoyeur (3) à godets (4) à partir de données fournies par des moyens électroniques (11,14) mesurant le poids dudit produit présent sur ledit convoyeur de transfert (2).

4. Dispositif selon la revendication 3 caractérisé en ce que ladite table vibrante est équipée de tôles verticales (12) présentant des encoches décalées (12a), de manière à ce que les constituants du produit tombent verticalement en long sur ledit convoyeur (2).

5. Dispositif selon l'une des revendications 3 ou 4 caractérisé en ce que chaque godet (4) forme un cylindre découpé en trois parties, deux parties latérales (4a,4b) et une partie centrale (4c), lesdites parties latérales s'articulant sur ladite partie centrale.

6. Dispositif selon l'une des revendications 3, 4 ou 5 caractérisé en ce qu'il comprend deux galets (6) permettant à une came (5) de fermer et d'ouvrir chaque godet (4).

7. Dispositif selon l'une des revendications 3 à 6 caractérisé en ce que ledit convoyeur (3) à godets (4) coopère avec un pignon (9) solidaire dudit plateau (7), ledit pignon présentant une denture appropriée pour maintenir les godets (4) fermés pendant le transfert de leur contenu dans les boîtes (13).

8. Dispositif selon l'une des revendications 3 à 7 caractérisé en ce qu'il comprend un convoyeur répartiteur (2a) pourvu de taquets (16) et un convoyeur intermédiaire (2b) sur lequel est déposé le produit provenant desdits taquets (16).

9. Dispositif selon l'une des revendications 1 à 8 caractérisé en ce qu'il comprend un convoyeur de pesée (2c) relié auxdits moyens electronique (11,14).

Fig. 1

Fig. 2

<u>Fig. 3</u>

Fig. 4

Fig. 5

Fig. 6

Fig. 7

Fig. 8

Fig. 9

EP 0 688 717 A1

Fig. 10

Office européen
des brevets

**RAPPORT DE RECHERCHE EUROPEENNE**

Numero de la demande

EP 95 46 0026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | US-A-4 386 490 (R. GRIFFITH)<br>* colonne 3, ligne 8 - colonne 5, ligne 37; figures * | 1,5 | B65B25/04<br>B65B19/34<br>B65G17/32 |
| A | US-A-2 907 158 (A. LABROZZI)<br>* colonne 2, ligne 7 - ligne 50; revendications; figures * | 3,4 | |
| A | DE-A-35 15 965 (F. KOOP)<br>* page 9, ligne 10 - page 12, ligne 5; figures 1-4 * | 5 | |
| D,A | US-A-4 453 368 (W. EGEE)<br>* colonne 5, ligne 7 - colonne 6, ligne 54; figures 1-8 * | 2 | |
| A | US-A-4 607 478 (S. MAGLECIC)<br>* colonne 2, ligne 20 - colonne 4, ligne 2; figures * | 1,3 | |
| A | GB-A-987 647 (L. JOURDAN) | | **DOMAINES TECHNIQUES RECHERCHES (Int.Cl.6)**<br><br>B65B<br>B65G |

Le présent rapport a été établi pour toutes les revendications

| Lieu de la recherche | Date d'achèvement de la recherche | Examinateur |
|---|---|---|
| LA HAYE | 13 Octobre 1995 | Jagusiak, A |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)